# EUROPEAN PATENT APPLICATION

(11) **EP 4 807 701 A1**
(43) Date of publication of application: **16.09.2026**
(21) Application number: 25784248.4
(22) Date of filing: 06.03.2025
(51) Int. Cl.: G06V 40/13, G06T 5/73

(54) **FINGERPRINT PROCESSING METHOD AND APPARATUS, AND ELECTRONIC DEVICE**

(30) Priority: 30.09.2024 CN 202411376324
(71) Applicant: SHENZHEN GOODIX TECHNOLOGY CO., LTD., Futian Free Trade Zone, Futian Shenzhen Guangdong 518000 (CN)
(72) Inventor: TANG, Jiawan, Guangdong 518000 (CN); WANG, Bo, Guangdong 518000 (CN); LI, Mingcai, Guangdong 518000 (CN)
(74) Representative: Metida
(86) International application number: PCT/CN2025/080927
(87) International publication number: WO 2026/065950

(57) **Abstract**

Embodiments of the present disclosure provide a method and apparatus for processing fingerprints and an electronic device. The method comprises: during a fingerprint template registration process, collecting fingerprint data through a fingerprint sensor at a first frame rate, wherein each frame of fingerprint data comprises a plurality of subdata of different phases, and at least two of the plurality of subdata of different phases are collected based on same configuration; comparing differences between two subdata of different phases collected based on the same configuration to obtain a movement blur of the frame of fingerprint data; and performing fingerprint template registration based on the movement blur of the frame of fingerprint data. By adopting the embodiment of the present disclosure, a finger can be continuously in contact with a fingerprint collection area and move during the fingerprint template registration process, without being limited to repeated pressing and raising, thereby improving the flexibility of user input in fingerprint template registration, improving the efficiency of fingerprint template registration, and ensuring the quality of registered fingerprint templates.

## Description

### CROSS REFERENCE TO RELATED APPLICATIONS

The present disclosure claims priority to Chinese Patent Application No. 2024113763245, filed with China National Intellectual Property Administration on September 30, 2024 and entitled "METHOD AND APPARATUS FOR PROCESSING FINGERPRINTS AND ELECTRONIC DEVICE", which is incorporated herein by reference in its entirety.

### TECHNICAL FIELD

The present disclosure relates to the technical field of fingerprint recognition, specifically to a method and apparatus for processing fingerprints and an electronic device.

### BACKGROUND

An ultrasonic fingerprint recognition system obtains a corresponding fingerprint image by emitting and receiving ultrasonic signals, and combines differences in acoustic impedance between a screen, a finger, and air to distinguish valleys and ridges on fingerprints, thereby obtaining fingerprint features for recognition. During application, the fingerprints of the finger first need to be collected as a recognition template, so the fingerprint template has an important impact on recognition.

In related technologies, fingerprint positions of the finger are collected by repeatedly pressing and raising the finger for template registration. During the fingerprint template registration process, the user is required to repeatedly place his finger on a fingerprint sensor. After each placement, the user is required to raise his finger and adjust the position of the finger, so that other positions of the finger come into contact with the fingerprint sensor when the finger is placed on the fingerprint sensor again. This repeated pressing and raising method is inefficient, resulting in a relatively long fingerprint template registration process. In addition, if the finger moves during the pressing process, the fingerprint image may distort and deform, resulting in a significant difference between the registered fingerprint template and the actual fingerprints, and affecting the final fingerprint recognition performance.

### SUMMARY

In view of the above problems, embodiments of the present disclosure provide a method and apparatus for processing fingerprints and an electronic device to at least partially solve the above technical problems.

In a first aspect, an embodiment of the present disclosure provides a method for processing fingerprints, including: during a fingerprint template registration process, collecting fingerprint data through a fingerprint sensor at a first frame rate, where each frame of fingerprint data includes a plurality of subdata of different phases, and at least two of the plurality of subdata of different phases are collected based on same configuration; comparing differences between two subdata of different phases collected based on the same configuration to obtain a movement blur of the frame of fingerprint data; and performing fingerprint template registration based on the movement blur of the frame of fingerprint data.

Optionally, the comparing differences between two subdata of different phases collected based on the same configuration to obtain a movement blur of the frame of fingerprint data includes: determining a difference map between the two subdata of different phases collected based on the same configuration; determining a dispersion of the difference map in a space domain; and determining the movement blur of the frame of fingerprint data based on the dispersion.

Optionally, the method further includes: determining a candidate fingerprint image for registration as a fingerprint template based on the frame of fingerprint data; and the determining the movement blur of the frame of fingerprint data based on the dispersion includes: determining a quantity of signals of the candidate fingerprint image; and normalizing the dispersion based on the quantity of signals to obtain the movement blur of the frame of fingerprint data.

Optionally, the method further includes: determining a candidate fingerprint image for registration as a fingerprint template based on the frame of fingerprint data; and the comparing differences between two subdata of different phases collected based on the same configuration to obtain a movement blur of the frame of fingerprint data further includes: determining an image quality score of the candidate fingerprint image; and adjusting the movement blur based on the image quality score, where the movement blur is negatively correlated with the image quality score.

Optionally, the adjusting the movement blur based on the image quality score includes: comparing the image quality score with at least one quality score threshold to obtain an image quality score interval corresponding to the image quality score; and adjusting the movement blur by a proportion corresponding to the image quality score interval.

Optionally, if the image quality score is greater than or equal to a first score threshold, the movement blur is decreased by a first proportion; if the image quality score is less than the first score threshold and greater than or equal to a second score threshold, the movement blur is decreased by a second proportion, where the first proportion is greater than the second proportion; and if the image quality score is less than the second score threshold, the movement blur is kept unchanged.

Optionally, the performing fingerprint template registration based on the movement blur of the frame of fingerprint data includes: classifying the frame of fingerprint data based on at least one movement blur threshold to obtain a movement blur type of the frame of fingerprint data, where the movement blur type includes a non-blur type and a full blur type; and performing fingerprint template registration based on the movement blur type of the frame of fingerprint data.

Optionally, the classifying the frame of fingerprint data based on at least one movement blur threshold to obtain a movement blur type of the frame of fingerprint data includes: if the movement blur is less than or equal to a first movement blur threshold, determining the movement blur type of the frame of fingerprint data to be a non-blur type; if the movement blur is greater than the first movement blur threshold and less than or equal to a second movement blur threshold, determining the movement blur type of the frame of fingerprint data to be a semi-blur type; and if the movement blur is greater than the second movement blur threshold, determining the movement blur type of the frame of fingerprint data to be a full blur type.

Optionally, the method further includes: determining a candidate fingerprint image for registration as a fingerprint template based on the frame of fingerprint data; and the performing fingerprint template registration based on the movement blur type of the frame of fingerprint data includes: if the type of the fingerprint image is the semi-blur type or non-blur type, determining, based on the image quality score and/or effective area of the candidate fingerprint image, whether to register the candidate fingerprint image as a fingerprint template.

Optionally, the determining, based on the image quality score and/or effective area of the candidate fingerprint image, whether to register the candidate fingerprint image as a fingerprint template includes: detecting whether the effective area of the candidate fingerprint image is greater than an area threshold; if the effective area of the candidate fingerprint image is greater than the area threshold, detecting whether the image quality score of the candidate fingerprint image is greater than a third score threshold; and if the image quality score of the candidate fingerprint image is greater than the third score threshold, registering the candidate fingerprint image as a fingerprint template.

Optionally, the performing fingerprint template registration based on the movement blur type of the frame of fingerprint data includes: if the movement blur type of the frame of fingerprint data is the non-blur type, performing registration of a first type of fingerprint template based on the frame of fingerprint data; and if the movement blur type of the frame of fingerprint data is the semi-blur type, performing registration of a second type of fingerprint template based on the frame of fingerprint data.

Optionally, the second type of fingerprint template is used to assist the first type of fingerprint template in fingerprint matching.

Optionally, the method further includes: determining whether the first type of registered fingerprint templates reaches a quantity threshold; if the first type of registered fingerprint templates reaches the quantity threshold, ending the fingerprint template registration; and if the first type of registered fingerprint templates does not reach the quantity threshold, continuing the step of collecting fingerprint data through a fingerprint sensor at a first frame rate.

Optionally, the method further includes: during a fingerprint recognition process, collecting fingerprint data through the fingerprint sensor at a second frame rate, where the first frame rate is greater than the second frame rate.

Optionally, the fingerprint template registration process includes a process of continuous contact between a finger and a fingerprint collection area and movement, where the movement is used to change the fingerprint position where the finger is in contact with the fingerprint collection area.

Optionally, the fingerprint sensor includes an ultrasonic fingerprint sensor.

In a second aspect, an embodiment of the present disclosure further provides an apparatus for processing fingerprints, including: a collection module, configured to, during a fingerprint template registration process, collect fingerprint data through a fingerprint sensor at a first frame rate, where each frame of fingerprint data includes a plurality of subdata of different phases, and at least two of the plurality of subdata of different phases are collected based on same configuration; and a registration module, configured to compare differences between two subdata of different phases collected based on the same configuration to obtain a movement blur of the frame of fingerprint data, and perform fingerprint template registration based on the movement blur of the frame of fingerprint data.

Optionally, the registration module is configured to determine a difference map between the two subdata of different phases collected based on the same configuration, determine a dispersion of the difference map in a space domain, and determine the movement blur of the frame of fingerprint data based on the dispersion.

Optionally, the registration module is further configured to determine a candidate fingerprint image for registration as a fingerprint template based on the frame of fingerprint data; and the registration module is configured to determine a quantity of signals of the candidate fingerprint image, and normalize the dispersion based on the quantity of signals to obtain the movement blur of the frame of fingerprint data.

Optionally, the registration module is further configured to determine a candidate fingerprint image for registration as a fingerprint template based on the frame of fingerprint data; and the registration module is configured to determine an image quality score of the candidate fingerprint image, and adjust the movement blur based on the image quality score, where the movement blur is negatively correlated with the image quality score.

Optionally, the registration module is configured to compare the image quality score with at least one quality score threshold to obtain an image quality score interval corresponding to the image quality score; and adjust the movement blur by a proportion corresponding to the image quality score interval.

Optionally, the registration module is configured to classify the frame of fingerprint data based on at least one movement blur threshold to obtain a movement blur type of the frame of fingerprint data, where the movement blur type includes a non-blur type and a full blur type; and perform fingerprint template registration based on the movement blur type of the frame of fingerprint data.

Optionally, the registration module is configured to: if the movement blur is less than or equal to a first movement blur threshold, determine the movement blur type of the frame of fingerprint data to be a non-blur type; if the movement blur is greater than the first movement blur threshold and less than or equal to a second movement blur threshold, determine the movement blur type of the frame of fingerprint data to be a semi-blur type; and if the movement blur is greater than the second movement blur threshold, determine the movement blur type of the frame of fingerprint data to be a full blur type.

Optionally, the registration module is further configured to determine a candidate fingerprint image for registration as a fingerprint template based on the frame of fingerprint data; and the registration module is configured to, if the type of the fingerprint image is the semi-blur type or non-blur type, determine, based on the image quality score and/or effective area of the candidate fingerprint image, whether to register the candidate fingerprint image as a fingerprint template.

Optionally, the registration module is configured to: if the movement blur type of the frame of fingerprint data is the non-blur type, perform registration of a first type of fingerprint template based on the frame of fingerprint data; and if the movement blur type of the fingerprint data is the semi-blur type, perform registration of a second type of fingerprint template based on the frame of fingerprint data.

In a third aspect, an embodiment of the present disclosure further provides an electronic device, including: a fingerprint sensor; and the aforementioned the apparatus for processing fingerprints.

In a fourth aspect, an embodiment of the present disclosure further provides an electronic device, including: a processor; and a memory storing a program, where the program includes instructions that, when executed by the processor, enable the processor to perform the above method in the embodiments of the present disclosure.

In a fifth aspect, an embodiment of the present disclosure further provides a non-transitory computer-readable storage medium storing computer instructions, where the computer instructions are used to enable a computer to perform the above method in the embodiments of the present disclosure.

According to the method and apparatus for processing fingerprints and the electronic device provided in the embodiments of the present disclosure, during the fingerprint template registration process, each frame of collected fingerprint data includes a plurality of subdata of different phases, at least two of the plurality of subdata of different phases are collected based on the same configuration, the movement blur of the frame of fingerprint data is obtained by comparing differences between two subdata of different phases collected based on the same configuration, and fingerprint template registration is performed based on the movement blur of the frame of fingerprint data, thereby at least partially avoiding registering a fingerprint image that is distorted and deformed due to the influence of finger movement as a fingerprint template, enabling a finger to be continuously in contact with a fingerprint collection area and move during the fingerprint template registration process without being limited to repeated pressing and raising, improving the flexibility of user input in fingerprint template registration, improving the efficiency of fingerprint template registration, and ensuring the quality of registered fingerprint templates.

These aspects or other aspects of the present disclosure will be clearer and easier to understand in the description of the following embodiments.

### BRIEF DESCRIPTION OF DRAWINGS

In order to explain the technical solutions in the embodiments of the present disclosure more clearly, a brief introduction will be provided to the accompanying drawings required for the description of the embodiments. Apparently, the accompanying drawings described below show only some embodiments of the present disclosure. For those skilled in the art, other drawings can be obtained based on these drawings without any creative efforts.
FIG. 1A illustrates a schematic diagram of an applicable electronic device according to an exemplary embodiment of the present disclosure.
FIG. 1B illustrates a schematic diagram of another applicable electronic device according to an exemplary embodiment of the present disclosure.
FIG. 1C illustrates a system block diagram of an applicable electronic device according to an exemplary embodiment of the present disclosure.
FIG. 2 illustrates a flowchart of a method for processing fingerprints according to an exemplary embodiment of the present disclosure.
FIG. 3 illustrates a flowchart of a method of determining a movement blur according to an exemplary embodiment of the present disclosure.
FIG. 4 illustrates a flowchart of a method of performing fingerprint template registration based on a movement blur according to an exemplary embodiment of the present disclosure.
FIG. 5 illustrates a structural block diagram of an apparatus for processing fingerprints according to an exemplary embodiment of the present disclosure.
FIG. 6 illustrates a structural block diagram of an ultrasonic fingerprint processing system according to an exemplary embodiment of the present disclosure.
FIG. 7 illustrates a structural block diagram of an exemplary electronic device that can be used to implement the embodiments of the present disclosure.

### DETAILED DESCRIPTION OF THE EMBODIMENTS

The following provides a detailed description of embodiments of the present disclosure, examples of which are shown in the accompanying drawings, where the same or similar reference numerals throughout represent the same or similar elements or elements with the same or similar functions. The embodiments described below with reference to the accompanying drawings are illustrative, and are only used to explain the present disclosure, rather than being construed as limiting the present disclosure.

In order to make a person skilled in the technical field understand the solutions of the present disclosure better, a clear and complete description of the technical solutions in the embodiments of the present disclosure will be provided below in conjunction with the accompanying drawings therein. Apparently, the described embodiments are merely some rather than all of the embodiments of the present disclosure. All other embodiments obtained by those skilled in the art based on the embodiments of the present disclosure without any creative efforts shall fall within the scope of protection of the present disclosure.

In the embodiments of the present disclosure, it should be noted that the relationship terms herein, such as first and second, are merely used for distinguishing one entity or operation from another, and do not necessarily require or imply that any actual relationship or sequence exists between these entities or operations.

Furthermore, the terms "include", "comprise", or any variants thereof are intended to cover a non-exclusive inclusion, so that a process, method, article, or equipment that includes a series of elements not only includes those elements, but also includes other elements not listed explicitly, or includes inherent elements of the process, method, article, or equipment. In the absence of more limitations, an element defined by "include a..." does not exclude other same elements existing in the process, method, article, or equipment including the elements.

In the description of the embodiments of the present disclosure, the terms such as "example" or "for example" are used to indicate examples, explanations, or descriptions. Any embodiment or design scheme described as "example" or "for example" in the embodiments of the present disclosure shall not be interpreted as being more preferred or having more advantages than another embodiment or design scheme. The terms such as "example" or "for example" are intended to present relative concepts in a clear manner.

In addition, the term "plurality" in the embodiments of the present disclosure refers to two or more. Therefore, in the embodiments of the present disclosure, the term "plurality" can also be understood as "at least two". The term "at least one" can be understood as one or more, such as one, two, or more. For example, including at least one indicates including one, two, or more, and the included ones are not limited. For example, including at least one of A, B, and C indicates including A, B, C, A and B, A and C, B and C, or A and B and C.

It should be noted that, in the embodiments of the present disclosure, the term "and/or" describes a relationship between associated objects, indicating three relationships, for example, A and/or B may indicate that A exists alone, A and B exist at the same time, or B exists alone. In addition, the character "/", unless otherwise specified, generally indicates an "or" relationship between the successively associated objects.

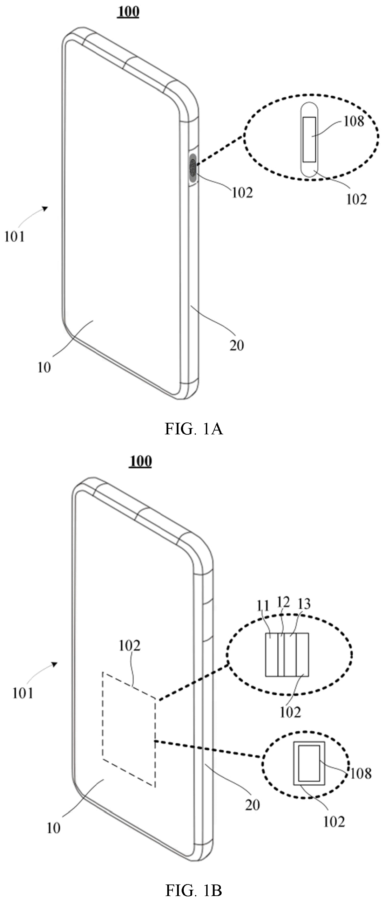

FIGs. 1A and 1B illustrate schematic diagrams of an electronic device in which various solutions described herein can be implemented according to exemplary embodiments of the present disclosure. As shown in FIGs. 1A and 1B, the electronic device 100 may include a device body 101 and a fingerprint sensor 102. The fingerprint sensor 102 can capture fingerprint images for fingerprint recognition. The fingerprint sensor 102 may include, but is not limited to, a capacitive fingerprint sensor, an optical fingerprint sensor, an ultrasonic fingerprint sensor, or the like, and the specific position of the fingerprint sensor 102 in the electronic device 100 may be on a side, back, or front of the device body 101 or under a frontal display screen according to actual product design needs.

In some embodiments, the electronic device 100 may be a portable electronic device, which may be a smart phone, a tablet, a laptop, a personal digital assistant, etc. In other embodiments, the electronic device 100 may be an intelligent wearable device. The embodiments of the present disclosure do not limit the type of the electronic device 100.

In some embodiments, the fingerprint sensor 102 may be specifically disposed on the side of the device body 101 of the electronic device 100. With the development of smart phones or other portable electronic devices towards slimness or foldability, the electronic device 100 is increasingly thin, and therefore, the fingerprint sensor 102 disposed on the side of the device body 101 is increasingly narrower.

With reference to FIG. 1A, as a typical embodiment, the device body 101 includes a display screen 10 and a middle frame 20. The display screen 10 is located on the front of the device body 101 to display images and provide a user with a human-computer interaction interface. The middle frame 20 is generally located between the display screen 10 and a rear shell of the electronic device to support the display screen 10 and bear various functional components inside the device body 101, such as a motherboard, a battery, cameras, a speaker, a microphone, and various sensor units. In specific embodiments, the middle frame 20 includes a border located on the periphery of the device body 101, and the border may include a plurality of sides and bear a power key, a volume key, or other function keys, where the fingerprint sensor 102 may be disposed on one side of the border and have a sensing area 108. In specific embodiments, the fingerprint sensor 102 may specifically be a fingerprint recognition chip or a fingerprint module with a fingerprint recognition chip, and may be integrated above the power key or volume key on the side of the border, embedded in a predetermined area on the side of the border or attached to an inner surface of the side of the border for the user to input fingerprints to implement a side fingerprint function of the electronic device 100.

In some embodiments, the fingerprint sensor 102 may specifically be disposed below the display screen of the electronic device 100, and the display screen is located on the front of the device body 101 to display images and provide a user with a human-computer interaction interface. Compared to the fingerprint sensor 102 disposed beyond the frontal display screen of the device body, the fingerprint sensor 102 disposed below the display screen of the electronic device 100 can increase the screen-to-body ratio of the electronic device. Various materials for the fingerprint sensor 102 may penetrate through the interior of the screen through ultrasonic waves or optics, to emit ultrasonic or optical signals to the outer surface of the display screen and receive reflected signals from a finger, so as to collect fingerprint images for fingerprint recognition.

With reference to FIG. 1B, as another typical embodiment, the difference from the embodiment in FIG. 1A is that the fingerprint sensor 102 is disposed below the display screen 10, that is, inside the display screen 10. The display screen 10 consists of a cover glass 11, a touchpad 12, and a display panel 13 in order from top to bottom. The fingerprint sensor 102 may be disposed below the display panel 13, the fingerprint sensor 102 has a sensing area 108, and the area on the display screen 10 that corresponds to the sensing area 108 is a fingerprint collection area. Generally, a visual prompt can be displayed in the fingerprint collection area on the screen 10 to inform the user of the position of the fingerprint collection area. The fingerprint sensor 102 can emit a signal through a penetration technology such as ultrasonic waves or optics, so that the signal penetrates through the cover glass 11, the touchpad 12, and the display panel 13; the signal can be reflected by the finger located on the outer surface of the cover glass 11 to form a reflected signal; the reflected signal penetrates through the cover glass 11, the touchpad 12, and the display panel 13 to reach the sensing area 108 of the fingerprint sensor 102; and the fingerprint sensor 102 generates a fingerprint image based on the reflected signal.

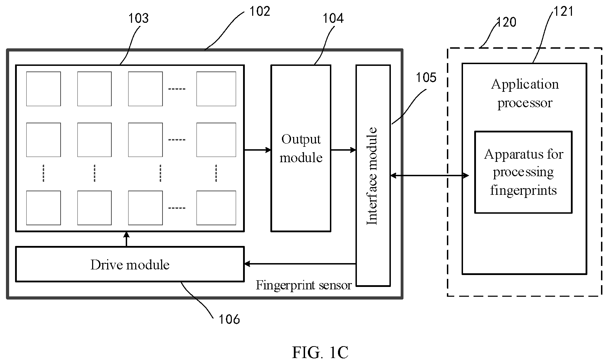

With further reference to FIG. 1C, the fingerprint sensor 102 includes a sensing array 103, an output module 104, an interface module 105, and a drive module 106, where the sensing array 103 is configured to couple with the user's finger to collect fingerprint information when the user presses the fingerprint sensor 102 to input fingerprints, and specifically includes a plurality of sensing electrodes distributed in an array. The area where the sensing array 103 is located or the effective fingerprint collection area is the sensing area 108 of the fingerprint sensor 102. The drive module 106 and the output module 104 are connected to the sensing array 103 and the interface module 105 respectively; the drive module 106 is configured to drive the sensing array 103 for scanning fingerprints to collect the fingerprint information of the user's finger; the output module 104 is configured to generate corresponding fingerprint data based on the fingerprint information collected by the sensing array 103, and output the fingerprint data to a control system 120 through the interface module 105; and the interface module 105 may specifically be a serial peripheral interface (SPI).

With continued reference to FIG. 1C, the control system 120 may include one or more general-purpose single-chip or multi-chip processors, digital signal processors (DSPs), application specific integrated circuits (ASICs), field programmable gate arrays (FPGAs) or other programmable logic devices, discrete gates or transistor logic components, discrete hardware components, or combinations thereof. According to some examples, the control system 120 may include dedicated components for controlling the fingerprint sensor 102. In some implementations, the functionality of the control system 120 may be divided in or between one or more controllers or processors, such as between dedicated sensor controllers and application processors of the electronic device. With reference to FIG. 1C, the control system 120 may include an application processor 121 of the electronic device. The application processor 121 may specifically be a central processing unit (CPU) or another processing or control unit with processing capability inside the electronic device 100, such as a micro control unit (MCU), which is connected to the interface module 105, includes an apparatus for processing fingerprints, and is mainly configured to control the working status of the fingerprint sensor 102, process the fingerprint data output by the fingerprint sensor 102, perform fingerprint template registration and fingerprint matching verification to determine whether the currently collected fingerprint image belongs to valid fingerprints, and unlock the electronic device 100 or perform other functions related to fingerprint recognition.

The fingerprint recognition usually includes a fingerprint template registration stage and a fingerprint verification stage. In the fingerprint template registration phase, user input fingerprints are collected to form a fingerprint template. In the fingerprint verification stage, user input fingerprints are collected to obtain a fingerprint query image, and the fingerprint query image is matched with the registered fingerprint template to verify whether the fingerprint query image belongs to valid fingerprints. In order to reduce the error rejection rate, a plurality of templates corresponding to the images of the finger are obtained in the fingerprint template registration stage. With reference to FIG. 1A, the narrow fingerprint sensor 102 can capture a small fingerprint position, that is, one fingerprint image is a small fingerprint position on the finger. The user's fingerprint position acting on the fingerprint sensor 102 varies, so fingerprint images need to be collected multiple times for fingerprint template registration to obtain a plurality of templates, so as to reduce the error rejection rate of fingerprint recognition. With reference to FIG. 1B, the fingerprint sensor 102 under the screen may have a large sensing area. Due to the influence of user's pressing habit and the like, the user's fingerprint position acting on the fingerprint sensor 102 is also relatively variable, so fingerprint images need to be collected multiple times for fingerprint template registration to obtain a plurality of templates, so as to reduce the error rejection rate of fingerprint recognition.

In order to obtain a plurality of templates, during the fingerprint template registration process, the user is required to repeatedly place his finger on the fingerprint sensor. After each placement, the user is required to raise his finger and adjust the position of the finger, so that other positions of the finger come into contact with the fingerprint sensor when the finger is placed on the fingerprint sensor again, thereby obtaining a plurality of fingerprint templates of a plurality of positions of the finger by registration. This repeated pressing and raising method is inefficient, resulting in a relatively long fingerprint template registration process. In addition, if the finger moves during the pressing process, the fingerprint image may distort and deform, resulting in a significant difference between the registered fingerprint template and the actual fingerprints, and affecting the final fingerprint recognition performance.

An embodiment of the present disclosure provides a method for processing fingerprints. The method can be applied to the electronic device 100 shown in FIG. 1A or 1B to improve fingerprint template registration experience.

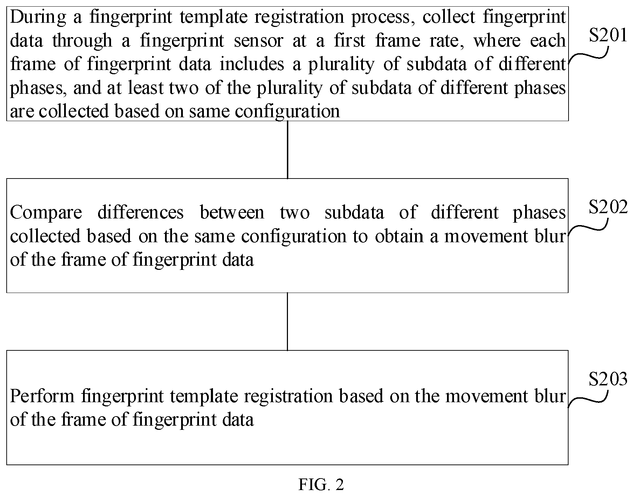

FIG. 2 illustrates a flowchart of a method for processing fingerprints according to an exemplary embodiment of the present disclosure. As shown in FIG. 2, the method for processing fingerprints according to the embodiment of the present disclosure can be applied to the fingerprint template registration stage, and can at least partially avoid registering fingerprint images that are distorted and deformed due to finger movement as fingerprint templates, so that the finger can be continuously in contact with the fingerprint collection area during the fingerprint template registration process, without being limited to repeated pressing and raising, thereby improving the flexibility of user input in fingerprint template registration, improving the efficiency of fingerprint template registration, and ensuring the quality of registered fingerprint templates. The method for processing fingerprints specifically includes the following steps.

Step S201: During a fingerprint template registration process, collect fingerprint data through a fingerprint sensor at a first frame rate, where each frame of fingerprint data includes a plurality of subdata of different phases, and at least two of the plurality of subdata of different phases are collected based on same configuration.

In the embodiment of the present disclosure, in the electronic device 100, the fingerprint sensor 102 can activate a fingerprint collection function upon detecting user finger contact or according to an instruction from the application processor 121 of the electronic device 100, collect, through the sensing array 103, user's fingerprint information input by pressing the fingerprint sensor 102, and generate a fingerprint image based on the fingerprint information input by the user.

For example, when the fingerprint sensor 102 is a capacitive fingerprint sensor, the plurality of sensing electrodes of the sensing array 103 form different coupling capacitors with the ridges and valleys of the user's finger, and the fingerprint sensor 102 drives the sensing array 103 to detect capacitance signals formed by the ridges and valleys and the sensing electrodes respectively, so as to collect fingerprint information of the user's finger pressing the sensing area 108 and generate a fingerprint image based on the fingerprint information; and the fingerprint image is specifically a digital image formed by integrating the fingerprint information of corresponding positions of the finger that is collected by all the sensing electrodes of the sensing array 103 respectively. The fingerprint sensor 102 can further perform some processing on the generated fingerprint image and temporarily store the fingerprint image therein to wait for the application processor 121 of the electronic device 100 to obtain it.

For another example, when the fingerprint sensor 102 is an ultrasonic fingerprint sensor, an ultrasonic emitter of the fingerprint sensor 102 emits ultrasonic signals, which pass through the surface of the skin and are reflected by the ridges and valleys of the fingerprints, where the ridges reflect more ultrasonic energy, while the valleys reflect less energy. An ultrasonic receiver of the fingerprint sensor 102 receives echo signals and converts the echo signals into electrical signals indicating the reflected ultrasonic energy, so as to collect fingerprint information of the user's finger pressing the sensing area 108 and generate a fingerprint image based on the fingerprint information. In some implementations, the ultrasonic emitter of the fingerprint sensor 102 may include a piezoelectric emitter layer, where a voltage can be applied to the piezoelectric emitter layer based on the applied signals, so that the piezoelectric emitter layer expands or contracts to generate ultrasonic waves. With reference to FIG. 1B, the ultrasonic waves generated by the piezoelectric emitter layer penetrate the display panel 13, the touchpad 12, and the cover glass 11, and are reflected by the ridges and valleys of the fingerprints. The ultrasonic receiver of the fingerprint sensor 102 may include a piezoelectric receiver layer and a pixel circuit array, where each pixel circuit can be configured to convert charges generated in the piezoelectric receiver layer close to the pixel circuit into electrical signals. Each pixel circuit may include a pixel input electrode that couples the piezoelectric receiver layer to the pixel circuit.

In the embodiment of the present disclosure, in the electronic device 100, the application processor 121 can enter the fingerprint template registration process in response to user operations to obtain a plurality of fingerprint templates. When entering the fingerprint template registration process, the application processor 121 can be connected to the interface module 105 and send instructions to the fingerprint sensor 102 through the interface module 105, so that the fingerprint sensor collects fingerprint data at the first frame rate for fingerprint template registration. Each frame of fingerprint data can be transmitted to the application processor 121 through the interface module 105.

In the embodiment of the present disclosure, in the electronic device 100, the application processor 121 can further display a visual prompt through the display screen 10 during the fingerprint template registration process. The visual prompt may include a prompt about fingerprint template registration operation. As a typical implementation, the user can be prompted to press his finger on the fingerprint sensor 102 and move the finger while pressing, so that different fingerprint positions on the finger press the fingerprint sensor 102, and the fingerprint sensor 102 collects a fingerprint image of a plurality of fingerprint positions. It should be understood that the embodiment of the present disclosure is not limited to continuous pressing and moving, but a combination of continuous pressing and moving with pressing-raising or only repeated pressing-raising may be available. As shown in FIG. 1B, the visual prompt may further include a prompt indicating the location of the fingerprint collection area. During the fingerprint template registration process, the visual prompt may further include registered fingerprint positions and unregistered fingerprint positions, so that the user moves his finger and the fingerprint sensor 102 collects fingerprint images of the unregistered fingerprint positions.

In the embodiment of the present disclosure, in the electronic device 100, the application processor 121 can control the fingerprint sensor 102 to collect the fingerprint data at the first frame rate during the fingerprint template registration process. For ease of explanation, with reference to FIG. 1B, when the finger presses the fingerprint collection area of the display screen 10 and moves, in order to improve overall registration experience and reduce registration time, the application processor 121 can set a relatively high first frame rate. The first frame rate during the fingerprint template registration process is higher than a second frame rate during a fingerprint recognition process. As a typical example, the application processor 121 can set the first frame rate during the fingerprint template registration process to approximately 60 Hz to 100 Hz, and set the second frame rate during the fingerprint recognition process to 10 Hz. And, the magnitudes of the first frame rate and the second frame rate can be set according to actual product design needs.

In the embodiment of the present disclosure, differences between two subdata of different phases collected based on the same configuration in each frame of fingerprint data can reflect a movement status of the finger when the frame of fingerprint data is collected. The movement status of the finger affects whether the fingerprint image is distorted and deformed and the degree of distortion and deformation. Therefore, step S202 can be executed to compare differences between the two subdata of different phases collected based on the same configuration, so as to obtain a movement blur of the frame of fingerprint data. The movement blur refers to a phenomenon of finger deformation, distortion, or smearing during movement, which may lead to mismatch between collected fingerprints and actual fingerprints. The movement blur can measure the likelihood and degree of this phenomenon caused by finger movement.

Further, in the embodiment of the present disclosure, a final fingerprint image can be generated based on at least some of a plurality of subdata of different phases in a frame of fingerprint data, as a candidate fingerprint image registered as a fingerprint template during the fingerprint template registration process. In the electronic device 100, the application processor 121 can perform fusion and other processing on the plurality of subdata of different phases to obtain the final fingerprint image.

As an implementation, in the electronic device 100, the application processor 121 can control the fingerprint sensor 102 to collect subdata of at least two phases. Specifically, when the fingerprint sensor 102 is an ultrasonic sensor, the phase of received reflected waves can be controlled by adjusting the time interval of emitting ultrasonic waves by the fingerprint sensor 102, so as to obtain a plurality of subdata of a plurality of phases at a plurality of time points. For example, a subdata of phase P₁ is obtained at time t₁ of frame F₁, a subdata of phase P₂ is obtained at time t₂, a subdata of phase P₃ is obtained at time t₃, and so on, where a subdata of phase Pᵢ is obtained at time tᵢ, and i subdata of i phases at i time points are obtained_{.} Further, a subdata of phase Ptᵢ₊₁ is obtained at time tᵢ₊₁. The time interval between t₁ and tᵢ₊₁ is the longest, which can better reflect the movement status of the finger. The subdata of phase P₁ and phase Pᵢ₊₁ are collected based on the same configuration. If the finger almost does not move between t₁ and tᵢ₊₁, there is almost no difference between the two subdata. If the finger moves between t₁ and tᵢ₊₁, the difference between the two subdata is positively correlated with the movement status of the finger. In step S202, the subdata of phase P₁ and phase Pᵢ₊₁ can be compared to obtain a movement blur of a frame of fingerprint data.

As an example, in the electronic device 100, a fingerprint image of any phase can be generated as follows. Specifically, the fingerprint sensor 102 is controlled to emit ultrasonic signals corresponding to that phase, and a receiver array of the fingerprint sensor 102 detects reflected signals formed by finger reflection and converts the reflected signals into electrical signals. Each receiver in the receiver array of the fingerprint sensor 102 corresponds to a specific spatial position and records the reflected signal at that position. The application processor 121 (or a separate analog-to-digital converter, etc.) can convert the electrical signals into digital signals, and the application processor 121 can further convert the digital signals into a digital format that can be processed. Due to different propagation speeds of ultrasonic waves in different media, the received signals may have different phase offsets. The application processor 121 can correct the phases of these signals to ensure a correct phase relationship between the signals. For each receiver, the corrected signals are integrated over time to enhance the signals and reduce noise. The integration may be simple time summation or weighted integration, where the weight may be related to the phase or amplitude of the signals. A fingerprint image at each receiver position can be reconstructed through the integrated signals. This usually involves an inverse projection algorithm or beam forming technology, which projects the signals back onto the surface of the finger to form a two-dimensional or three-dimensional fingerprint image. In the embodiment of the present disclosure, the phase offset used for phase correction and the integration time used for integration are almost the same when a first fingerprint image and a second fingerprint image of a predetermined phase are generated, so that the processing methods for both are almost the same.

Continuing with the above implementation, the multi-phase subdata obtained from t₁ to tᵢ can be fused to highlight fingerprint features and suppress noise. During the fingerprint template registration process, candidate fingerprint images for registration as fingerprint templates are obtained through fusion. The fusion may be simple summation, weighted averaging, or more complex image processing algorithms, and is not limited by the embodiments of the present disclosure.

In the above implementation, theoretically, the more phases there are, the more accurate the final fingerprint image generated based on multi-phase fingerprint images will be. However, the more phases there are, the longer the time for generating a frame of fingerprint data is, which will affect the frame rate. Considering the significant impact of sliding registration on the frame rate, some performance can be sacrificed and a few phases are used. As a typical implementation, a frame of fingerprint data includes fingerprint images of two phases, phase0 and phase1, plus one fingerprint image of phase2 with the same configuration as phase0, a total of three fingerprint images of three phases at three time points. It should be understood that, in specific implementation, the number of phases can be set according to actual product design needs to meet the design requirements related to the frame rate and fingerprint image quality.

Step S202: Compare differences between two subdata of different phases collected based on the same configuration to obtain a movement blur of the frame of fingerprint data.

In the embodiment of the present disclosure, in the electronic device 100, after obtaining a frame of fingerprint data generated by the fingerprint sensor 102, the application processor 121 can compare the differences between the two subdata of different phases collected based on the same configuration in the frame of fingerprint data to obtain the movement blur of the frame of fingerprint data. The subdata contained in each frame of fingerprint data has a temporal order, and two subdata at a longer time interval can be selected for comparison to better reflect the movement status of the finger. For example, the earliest subdata and the last subdata in each frame of fingerprint data are selected for comparison to obtain the movement blur of the frame of fingerprint data.

As an implementation, comparing differences between two subdata of different phases collected based on the same configuration to obtain a movement blur of the frame of fingerprint data includes: determining a difference map between the two subdata of different phases collected based on the same configuration; determining a dispersion of the difference map in a space domain; and determining the movement blur of the frame of fingerprint data based on the dispersion. The dispersion of the difference map in the space domain may be a statistical variance, statistical standard deviation, etc. of each pixel in the difference map.

The magnitude of the aforementioned dispersion is affected by finger pressing force, the degree of differentiation between fingerprint ridges and valleys, etc. For example, if the pressing force of the same finger of the same user is different, the calculated dispersion may be different; and if the degree of differentiation between fingerprint ridges and valleys of different fingers (of the same user or different users) is different, the calculated dispersion may be different. If the dispersion is directly used as the movement blur, it is difficult to unify a standard for fingerprint template registration based on the movement blur, that is, it is difficult for one standard to adapt to different pressing force and differentiation between fingerprint ridges and valleys. Considering different quantities of signals of fingerprint images caused by the finger pressing force and the degree of differentiation between fingerprint ridges and valleys, as a further implementation, determining the movement blur of the frame of fingerprint data based on the dispersion includes: determining a quantity of signals of a candidate fingerprint image, and normalizing the dispersion based on the quantity of signals to obtain the movement blur of the frame of fingerprint data. The normalized dispersion is used as the movement blur, and its magnitude is almost independent of the finger pressing force and the degree of differentiation between fingerprint ridges and valleys, making it easy to set a standard for fingerprint template registration based on the movement blur.

The quality of the candidate fingerprint image generated based on the fingerprint data is affected by the finger pressing force, the degree of differentiation between fingerprint ridges and valleys, etc. If the fingerprint ridges and valleys are clear and the pressing force is appropriate, even if the finger movement is relatively obvious (such as a large sliding amplitude), the quality of the candidate fingerprint image is still relatively high. When the finger movement is relatively obvious, the movement blur obtained in step S201 is often relatively high. As a result, the candidate fingerprint image with relatively high quality may be abandoned, thereby reducing the efficiency of fingerprint template registration and increasing the duration of fingerprint template registration. In this case, as a further implementation, an image quality score of the candidate fingerprint image can further be determined; and the movement blur is adjusted based on the image quality score, where the movement blur is negatively correlated with the image quality score. The adjusted movement blur is negatively correlated with the image quality score. During fingerprint template registration based on the movement blur, the candidate fingerprint image with relatively high image quality score can be prevented from being abandoned, thereby improving the efficiency of fingerprint template registration and decreasing the duration of fingerprint template registration.

In the above implementation, for a user with good fingerprint conditions (clear ridges and valleys), even if the finger movement is obvious during the registration process (correspondingly, the movement blur before adjustment is relatively high), a candidate fingerprint image with relatively high image quality score can still be obtained. The adjusted movement blur combines the image quality score and the movement blur, thereby preventing the candidate fingerprint image with relatively high image quality score from being abandoned, and enabling quick sliding of the finger to quickly collect a high-quality fingerprint image of a finger's effective fingerprint position and quickly complete fingerprint template registration. A user with poor fingerprint conditions (unclear ridges and valleys) can slide his finger slowly for fingerprint template registration.

As a further typical implementation, adjusting the movement blur based on the image quality score includes: comparing the image quality score with at least one quality score threshold to obtain an image quality score interval corresponding to the image quality score; and adjusting the movement blur by a proportion corresponding to the image quality score interval. For example, a first score threshold and a second score threshold are set to divide image quality scores into three intervals. If the image quality score is greater than or equal to the first score threshold, the movement blur is decreased by a first proportion; if the image quality score is less than the first score threshold and greater than or equal to the second score threshold, the movement blur is decreased by a second proportion, where the first proportion is greater than the second proportion; and if the image quality score is less than the second score threshold, the movement blur is kept unchanged. It should be understood that the embodiments of the present disclosure can set more or fewer score thresholds, and the more the score thresholds, the finer the adjustment on the movement blur based on the image quality score.

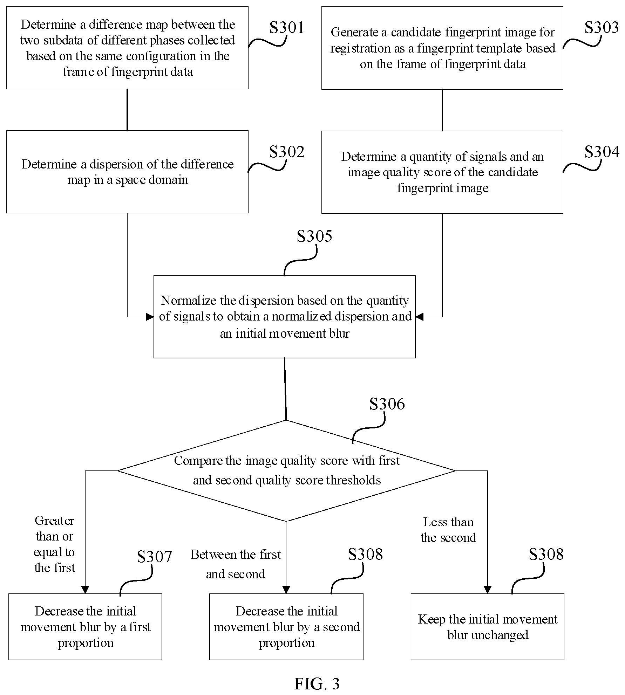

The above typical process of obtaining the movement blur can be summarized through the flowchart shown in FIG. 3. FIG. 3 illustrates a flowchart of a method for determining a movement blur according to an exemplary embodiment of the present disclosure. As shown in FIG. 3, the method for obtaining a movement blur according to the embodiment of the present disclosure includes steps S301 to S309.

Step S301: Determine a difference map between two subdata of different phases collected based on the same configuration in a frame of fingerprint data.

For example, a frame of fingerprint data includes two phases, phase0 and phase1, plus one phase2 with the same configuration as phase0, a total of three phases. A difference map between a fingerprint image of phase0 and a fingerprint image of phase2 in the frame of fingerprint data is determined.

Step 302: Determine a dispersion of the difference map in a space domain. Specifically, the dispersion of the difference map in the space domain may be a statistical variance, statistical standard deviation, etc. of each pixel in the difference map.

Step S303: Generate a candidate fingerprint image for registration as a fingerprint template based on the frame of fingerprint data.

Step S304: Determine a quantity of signals and an image quality score of the candidate fingerprint image.

Step S305: Normalize the dispersion based on the quantity of signals to obtain a normalized dispersion and an initial movement blur.

Step S306: Compare the image quality score with a first quality score threshold and a second quality score threshold. If the image quality score is greater than or equal to the first score threshold, step S307 is performed; if the image quality score is less than the first score threshold and greater than or equal to the second score threshold, S308 is performed; and if the image quality score is less than the second score threshold, S309 is performed.

Step S307: Decrease the initial movement blur by a first proportion to obtain the movement blur.

Step S308: Decrease the initial movement blur by a second proportion to obtain the movement blur.

The first proportion is greater than the second proportion.

Step S309: Keep the initial movement blur unchanged to obtain the movement blur. That is, if the image quality score is less than the second score threshold, the adjustment proportion is 1.

For example, the first quality score threshold is 50, and the second quality score threshold is 35. The initial movement blur is represented as S₀ and the movement blur is represented as S. If the image quality score is greater than or equal to 50, the initial movement blur is decreased by 5 times, that is, S=S₀/5; if the image quality score is less than 50 and greater than or equal to 35, the initial movement blur is decreased by 2 times, that is, S=S₀/2; and if the image quality score is less than 35, the initial movement blur is kept unchanged, that is, S=S₀.

The movement blur is obtained by the method shown in FIG. 3, the dispersion is normalized based on the quantity of signals of the candidate fingerprint image, and the normalized dispersion is used as the initial movement blur, so the magnitude of the dispersion is almost independent of the finger pressing force and the degree of differentiation between fingerprint ridges and valleys, making it easy to set a standard for fingerprint template registration based on the movement blur. The initial movement blur is adjusted based on the image quality score of the candidate fingerprint image. The adjusted movement blur combines the image quality score and the movement blur, thereby preventing a candidate fingerprint image with relatively high image quality score from being abandoned, improving the probability of a high-quality candidate fingerprint image passing movement blur determination, and shortening the duration of fingerprint template registration.

Step S203: Perform fingerprint template registration based on the movement blur of the frame of fingerprint data.

In the embodiment of the present disclosure, whether to register the candidate fingerprint image corresponding to the fingerprint data as a template can be determined based on the movement blur of the frame of fingerprint data. In some implementations, what type of template the candidate fingerprint image is registered as can be further determined.

As an implementation, performing fingerprint template registration based on the movement blur of the frame of fingerprint data specifically includes: classifying the fingerprint data based on at least one movement blur threshold to obtain a movement blur type of the frame of fingerprint data; and performing fingerprint template registration based on the movement blur type of the frame of fingerprint data. The movement blur type may include a non-blur type and a full blur type. In some implementations, if the movement blur type is the non-blur type, the corresponding candidate fingerprint image is registered as a fingerprint template; and if the movement blur type is the full blur type, the corresponding fingerprint data are abandoned, that is, the candidate fingerprint image is not registered as a fingerprint template. In some implementations, the movement blur type may include a non-blur type, a semi-blur type, and a full blur type; if the movement blur type is the non-blur type, the corresponding candidate fingerprint image is registered as a first type of fingerprint template; if the movement blur type is the semi-blur type, the corresponding candidate fingerprint image is registered as a second type of fingerprint template; and if the movement blur type is a full blur type, the corresponding fingerprint data are abandoned, that is, the candidate fingerprint image is not registered as a fingerprint template. The second type of fingerprint template is used to assist the first type of fingerprint template in fingerprint matching. Specifically, the first type of fingerprint template may be a strong fingerprint template, and the second type of fingerprint template may be a weak fingerprint template. The strong fingerprint template may be used alone for fingerprint matching, while the weak fingerprint template may assist in fingerprint matching without being used alone for fingerprint matching.

As an implementation, classifying the fingerprint data based on at least one movement blur threshold to obtain a movement blur type of the fingerprint data may specifically include: if the movement blur is less than or equal to a first movement blur threshold, determining the movement blur type of the fingerprint data to be a non-blur type, indicating that the fingerprints are almost not affected by finger movement and not blurred, and the fingerprints are almost normal; if the movement blur is greater than the first movement blur threshold and less than or equal to a second movement blur threshold, determining the movement blur type of the fingerprint data to be a semi-blur type, indicating that the fingerprints have little deformation due to the influence of finger movement; and if the movement blur is greater than the second movement blur threshold, determining the movement blur type of the fingerprint data to be a full blur type, indicating that the fingerprints are abnormal due to the influence of finger movement.

In the embodiments of the present disclosure, before the candidate fingerprint image is registered as a fingerprint template, whether to register the candidate fingerprint image as a fingerprint template can be determined based on the image quality score and/or effective area of the candidate fingerprint image. As an implementation, determining, based on the image quality score and/or effective area of the candidate fingerprint image, whether to register the candidate fingerprint image as a fingerprint template may specifically include: detecting whether the effective area of the candidate fingerprint image is greater than an area threshold; if the effective area of the candidate fingerprint image is greater than the area threshold, detecting whether the image quality score of the candidate fingerprint image is greater than a third score threshold; and if the image quality score of the candidate fingerprint image is greater than the third score threshold, registering the candidate fingerprint image as a fingerprint template. For example, when the movement blur type is a non-blur type, the corresponding candidate fingerprint image is registered as a first type of fingerprint template; and when the movement blur type is a semi-blur type, the corresponding candidate fingerprint image is registered as a second type of fingerprint template.

In the embodiments of the present disclosure, it is determined whether the first type of registered fingerprint templates reaches a quantity threshold; if the first type of registered fingerprint templates reaches the quantity threshold, ending the fingerprint template registration; and if the first type of registered fingerprint templates does not reach the quantity threshold, continuing to collect fingerprint data through the fingerprint sensor at the first frame rate to continue the fingerprint template registration.

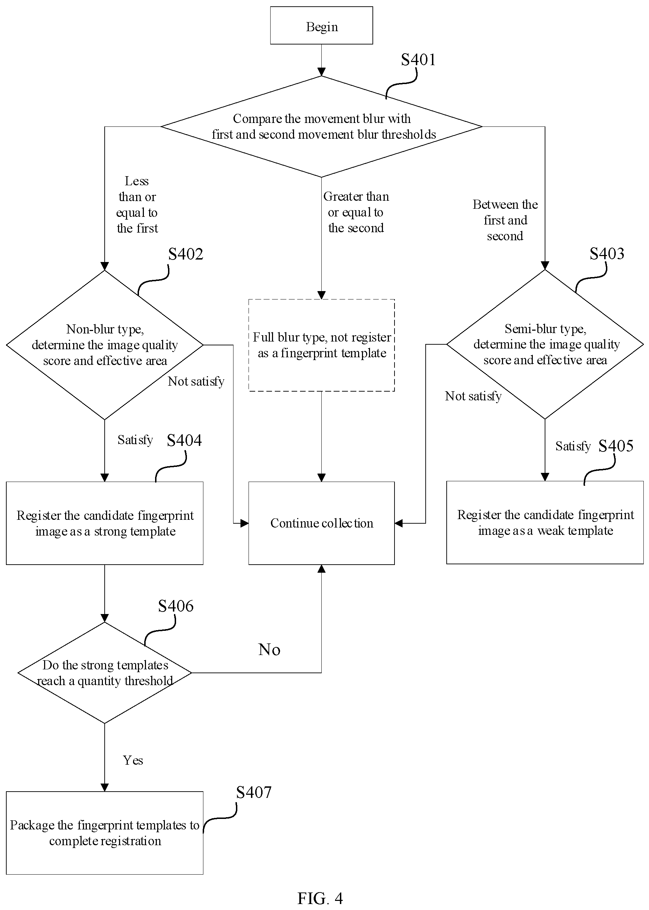

The typical process of performing fingerprint template registration based on the movement blur of each frame of fingerprint data can be summarized through the flowchart shown in FIG. 4. FIG. 4 illustrates a flowchart of a method of performing fingerprint template registration based on a movement blur according to an exemplary embodiment of the present disclosure. As shown in FIG. 4, the method of performing fingerprint template registration based on the movement blur of each frame of fingerprint data includes steps S401 to S407.

Step S401: Compare the movement blur of each frame of fingerprint data with a first movement blur threshold and a second movement blur threshold. The movement blur can be determined based on the embodiments of the present disclosure, such as by the method shown in FIG. 3, which will not be repeated here.

If the movement blur is less than or equal to the first movement blur threshold, the movement blur type of the frame of fingerprint data is determined to be a non-blur type, and step S402 is performed; if the movement blur is greater than the first movement blur threshold and less than or equal to the second movement blur threshold, the movement blur type of the frame of fingerprint data is determined to be a semi-blur type, and step S403 is performed; and if the movement blur is greater than the second movement blur threshold, the movement blur type of the frame of fingerprint data is determined to be a full blur type, registration as a fingerprint template is skipped, and fingerprint data continue to be collected through the fingerprint sensor at the first frame rate to continue the fingerprint template registration.

Step S402: Determine, based on the image quality score and effective area of the candidate fingerprint image corresponding to the frame of fingerprint data, whether to register the candidate fingerprint image as a fingerprint template, and if so, perform step S404. Otherwise, the candidate fingerprint image is not registered as a fingerprint template, and fingerprint data continue to be collected through the fingerprint sensor at the first frame rate to continue the fingerprint template registration.

Step S403: Determine, based on the image quality score and effective area of the candidate fingerprint image corresponding to the frame of fingerprint data, whether to register the candidate fingerprint image as a fingerprint template, and if so, perform step S405. Otherwise, the candidate fingerprint image is not registered as a fingerprint template, and fingerprint data continue to be collected through the fingerprint sensor at the first frame rate to continue the fingerprint template registration.

Step S404: Register the candidate fingerprint image corresponding to the frame of fingerprint data as a strong template.

Step S405: Register the candidate fingerprint image corresponding to the frame of fingerprint data as a weak template.

Step S406: Determine whether the registered strong templates reach a quantity threshold. If the registered strong templates reach the quantity threshold, step S407 is performed; if the registered strong templates do not reach the quantity threshold, fingerprint data continue to be collected through the fingerprint sensor at the first frame rate to continue the fingerprint template registration.

Step S407: Package the fingerprint templates to complete registration.

Through the method for processing fingerprints according to the embodiments of the present disclosure, during the fingerprint template registration process, a movement way such as finger sliding is used for registration, and fingerprint images are collected by increasing the frame rate, thereby improving registration experience and shortening registration time. In order to ensure the quality of fingerprint images during finger movement, the movement status of the finger during data collection is determined by comparing differences between two subdata of different phases collected based on the same configuration in a frame of fingerprint data, to filter out fingerprint data frames in which the finger does not move or does not move obviously, thereby improving registration experience without affecting the image quality of templates, and thus not affecting the success rate of recognition. When the fingerprint position of the finger covering the screen moves, in order to improve overall registration experience and shorten registration time, the collection frame rate is higher than that of the fingerprint recognition process. Considering the significant difference in finger movement speed among users, it is inevitable to collect deformed fingerprint signals, and the inconsistency between the registered template area and the actual fingerprints may seriously affect recognition efficiency. Therefore, useful signals that are basically consistent with actual fingerprints are screened out, and valid signals are selected for data processing to greatly improve recognition accuracy.

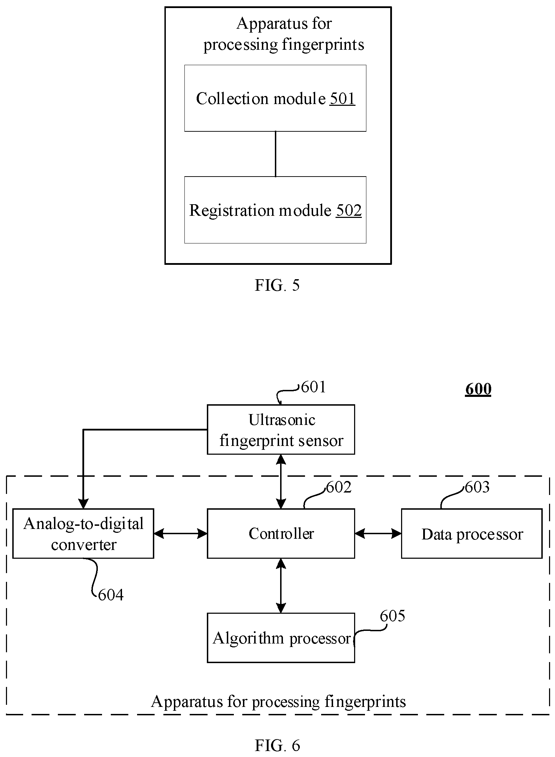

An embodiment of the present disclosure further provides an apparatus for processing fingerprints. As shown in FIG. 5, the apparatus for processing fingerprints provided in the embodiment of the present disclosure may include a collection module 501 and a registration module 502. The collection module 501 is configured to, during a fingerprint template registration process, collect fingerprint data through a fingerprint sensor at a first frame rate, where each frame of fingerprint data includes a plurality of subdata of different phases, and at least two of the plurality of subdata of different phases are collected based on same configuration. The registration module 502 is configured to compare differences between two subdata of different phases collected based on the same configuration to obtain a movement blur of the frame of fingerprint data, and perform fingerprint template registration based on the movement blur of the frame of fingerprint data.

In some implementations, the registration module 502 may specifically be configured to determine a difference map between the two subdata of different phases collected based on the same configuration, determine a dispersion of the difference map in a space domain, and determine the movement blur of the frame of fingerprint data based on the dispersion.

In some implementations, the registration module 502 is further configured to determine a candidate fingerprint image for registration as a fingerprint template based on the frame of fingerprint data. Further, the registration module 502 may specifically be configured to: determine a quantity of signals of the candidate fingerprint image, and normalize the dispersion based on the quantity of signals to obtain the movement blur of the frame of fingerprint data.

In some implementations, the registration module 502 is further configured to determine a candidate fingerprint image for registration as a fingerprint template based on the frame of fingerprint data. Further, the registration module 502 may specifically be configured to: determine an image quality score of the candidate fingerprint image; and adjust the movement blur based on the image quality score, where the movement blur is negatively correlated with the image quality score.

As an implementation, the registration module 502 may specifically be configured to: compare the image quality score with at least one quality score threshold to obtain an image quality score interval corresponding to the image quality score; and adjust the movement blur by a proportion corresponding to the image quality score interval.

As an implementation, the registration module 502 may specifically be configured to: classify the fingerprint data based on at least one movement blur threshold to obtain a movement blur type of the frame of fingerprint data, where the movement blur type includes a non-blur type and a full blur type; and perform fingerprint template registration based on the movement blur type of the frame of fingerprint data.

As an implementation, the registration module 502 may specifically be configured to: if the movement blur is less than or equal to a first movement blur threshold, determine the movement blur type of the frame of fingerprint data to be a non-blur type; if the movement blur is greater than the first movement blur threshold and less than or equal to a second movement blur threshold, determine the movement blur type of the frame of fingerprint data to be a semi-blur type; and if the movement blur is greater than the second movement blur threshold, determine the movement blur type of the frame of fingerprint data to be a full blur type.

As an implementation, the registration module 502 is further configured to determine the candidate fingerprint image for registration as a fingerprint template based on the frame of fingerprint data. Further, the registration module 502 may specifically be configured to: if the type of the fingerprint image is the semi-blur type or non-blur type, determine, based on the image quality score and/or effective area of the candidate fingerprint image, whether to register the candidate fingerprint image as a fingerprint template.

Further, the registration module 502 may be specifically configured to: if the movement blur type of the frame of fingerprint data is the non-blur type, perform registration of a first type of fingerprint template based on the frame of fingerprint data; and if the movement blur type of the fingerprint data is the semi-blur type, perform registration of a second type of fingerprint template based on the frame of fingerprint data.

In some embodiments, the apparatus for processing fingerprints may form a fingerprint recognition system inside the electronic device 100 together with the fingerprint sensor 102 shown in FIG. 1A, 1B, or 1C, where the apparatus for processing fingerprints may specifically be the apparatus for processing fingerprints shown in FIG. 1B or 1C, and may be configured on the application processor 121 (such as a central processing unit CPU) of the electronic device 100 to perform the main steps of the method for processing fingerprints described in the above embodiments. In other alternative embodiments, the apparatus for processing fingerprints may be implemented by other processing units or control units with image processing capabilities (such as a micro control unit MCU).

In some embodiments, the apparatus for processing fingerprints may be implemented by modules as shown in FIG. 6. As shown in FIG. 6, the modules of a fingerprint system 600 include: an ultrasonic fingerprint sensor 601, a controller 602, a data processor 603, an analog-to-digital converter 604, and an algorithm processor 605. Each module is controlled by the controller 602. The controller 602 controls the ultrasonic fingerprint sensor 601 to generate and receive signals, the ultrasonic fingerprint sensor 601 completes digital-to-analog conversion, the data processor 603 completes rearrangement and packaging of data, and the converted data are input into the algorithm processor 605 for algorithm processing, thereby completing fingerprint template registration and recognition. The algorithm processor 605 can perform the main steps of the method for processing fingerprints described in the above embodiments. The controller 602, the data processor 603, the analog-to-digital converter 604, and the algorithm processor 605 can be used as one implementation of the control system 120 shown in FIG. 1C. The functions of the apparatus for processing fingerprints are divided into the controller 602, the data processor 603, the analog-to-digital converter 604, and the algorithm processor 605 for implementation.

Sliding fingerprint template registration is implemented in the ultrasonic fingerprint system. Benefited from the high collection frame rate of ultrasonic signals processed by the ultrasonic fingerprint sensor 601, the ultrasonic fingerprint template registration process differs from the conventional finger pressing registration method in that a movement way such as finger sliding is used for registration, and fingerprint signals are collected by increasing the frame rate of ultrasonic signals, thereby improving registration experience and shortening registration time; in order to ensure the quality of fingerprint images during finger movement, the movement status of the finger during data collection is determined by comparing differences between fingerprint images at different time points during finger movement, to filter out image signals in which the finger does not move obviously, thereby improving registration experience without affecting the image quality of templates, and thus not affecting the success rate of recognition. Compared to other schemes for template registration by pressing and raising, the higher frame rate of ultrasonic signals enables collection of more data in a short time even during movement, so it is easier to obtain images without movement blur, and signal collection at finger fingerprint positions in a shorter time can be effectively completed, improving the experience and efficiency of fingerprint template registration.

An embodiment of the present disclosure further provides an electronic device 100, including a device body 101 and the aforementioned fingerprint sensor 102 disposed on the device body 101. In some embodiments, the electronic device 100 may be a portable electronic device, which may be a smart phone, a tablet, a laptop, a personal digital assistant, etc. Alternatively, the electronic device 100 may be an intelligent wearable device, and is not limited by the embodiments of the present disclosure.

The electronic device 100 provided in the embodiment of the present disclosure may further include: an application processor 121; and a memory for storing a program, where the program includes instructions that, when executed by the application processor 121, enable the application processor 121 to perform the methods in the above embodiments, such as the methods shown in FIGs. 2 to 4.

An embodiment of the present disclosure further provides a non-transitory computer-readable storage medium storing computer instructions, where the computer instructions are used to enable the application processor 121 of the electronic device 100 to perform the methods in the above embodiments, such as the methods shown in FIGs. 2 to 4.

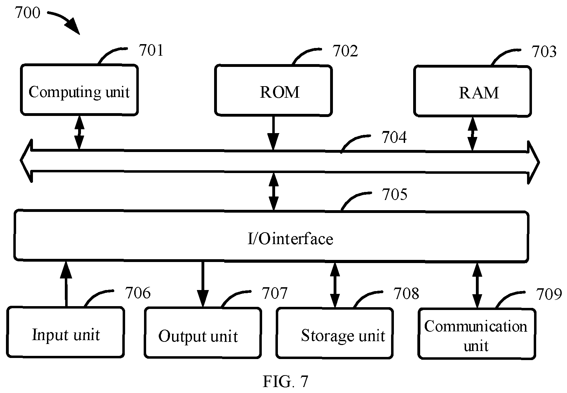

FIG. 7 illustrates a structural block diagram of an electronic device 700 provided in an embodiment of the present disclosure, which is an example of a hardware device that can be applied to various aspects of the present disclosure. The electronic device 700 may include a computing unit 701, which can perform various appropriate operations and processing according to a computer program stored in a read-only memory (ROM) 702 or a computer program loaded from a storage unit 708 to a random access memory (RAM) 703. The RAM 703 may further store various programs and data required for the operation of the electronic device 700. The computing unit 701, the ROM 702, and the RAM 703 are connected to each other through a bus 704. An input/output (I/O) interface 705 is also connected to the bus 704.

A plurality of components in the electronic device 700 are connected to the I/ O interface 705, including: an input unit 706, an output unit 707, a storage unit 708, and a communication unit 709. The input unit 706 may be any type of device capable of inputting information to the electronic device 700, and the input unit 706 may receive input numerical or character information and generate key signal input related to user settings and/or function control of the electronic device. The output unit 707 may be any type of device capable of presenting information, and may include, but is not limited to, a display, a speaker, a video/audio output terminal, a vibrator, and/or a printer. The storage unit 708 may include, but is not limited to, a magnetic disk and an optical disc. The communication unit 709 allows the electronic device 700 to exchange information/data with other devices through a computer network such as the Internet and/or various telecommunications networks, and may include, but is not limited to, a modem, a network card, an infrared communication device, a wireless communication transceiver and/or a chipset, such as a Bluetooth device, a WiFi device, a WiMax device, a cellular communication device, and/or the like.

The computing unit 701 may be various general-purpose and/or special-purpose processing components with processing and computing capabilities. Some examples of the computing unit 701 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller. The computing unit 701 performs various methods and processing described in the present disclosure. For example, in some embodiments, the method for processing fingerprints in the embodiments of the present disclosure may be implemented as a computer software program tangibly contained in a machine-readable medium, such as the storage unit 708. In some embodiments, a part or all of the computer program may be loaded and/or installed onto the electronic device 700 via the ROM 702 and/or the communication unit 709. In some embodiments, the computing unit 701 may be configured to perform the methods of the above embodiments by any other suitable means (for example, by means of firmware).

Program codes used to implement the method of the present disclosure may be written in one programming language or any combination of more programming languages. These program codes may be provided for a processor or controller of a general-purpose computer, a special-purpose computer, or other programmable data processing apparatuses, so that when the program codes are executed by the processor or controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

As used in the present disclosure, the terms "machine-readable medium" and "computer-readable medium" refer to any computer program product, device, and/or apparatus (e.g., a magnetic disk, an optical disk, a memory, or a programmable logic device (PLD)) used to provide machine instructions and/or data to a programmable processor, including machine-readable media that receive machine instructions as machine-readable signals. The term "machine-readable signal" refers to any signal used to provide machine instructions and/or data to the programmable processor.

To provide interaction with a user, the systems and technologies described herein may be implemented on a computer, and the computer is provided with: a display apparatus for displaying information to the user; and a keyboard and a pointing apparatus through which the user can provide input to the computer. Others types of apparatuses may also be used to provide interaction with the user, for example, the feedback provided to the user may be any form of sensory feedback (such as visual feedback, auditory feedback, or tactile feedback); and may be in any form (including acoustic input, voice input, or tactile input) to receive input from the user.

The above are merely the preferred embodiments of the present disclosure, and do not limit the present disclosure in any form. Although the present disclosure is disclosed above through the preferred embodiments, the present disclosure is not limited thereto. Any person skilled in the art may make slight changes or modifications to the technical content disclosed above into equivalent embodiments without departing from the scope of the technical solutions of the present disclosure. Any brief modifications and equivalent changes made to the above embodiments based on the technical essence of the present disclosure without departing from the content of the technical solutions of the present disclosure still fall within the scope of the technical solutions of the present disclosure.

## Claims

1. A method for processing fingerprints, comprising:
during a fingerprint template registration process, collecting fingerprint data through a fingerprint sensor at a first frame rate, wherein each frame of fingerprint data comprises a plurality of subdata of different phases, and at least two of the plurality of subdata of different phases are collected based on same configuration;
comparing differences between two subdata of different phases collected based on the same configuration to obtain a movement blur of the frame of fingerprint data; and
performing fingerprint template registration based on the movement blur of the frame of fingerprint data.

2. The method according to claim 1, wherein the comparing differences between two subdata of different phases collected based on the same configuration to obtain a movement blur of the frame of fingerprint data comprises:
determining a difference map between the two subdata of different phases collected based on the same configuration;
determining a dispersion of the difference map in a space domain; and
determining the movement blur of the frame of fingerprint data based on the dispersion.

3. The method according to claim 2, further comprising: determining a candidate fingerprint image for registration as a fingerprint template based on the frame of fingerprint data; wherein the determining the movement blur of the frame of fingerprint data based on the dispersion comprises:
determining a quantity of signals of the candidate fingerprint image; and
normalizing the dispersion based on the quantity of signals to obtain the movement blur of the frame of fingerprint data.

4. The method according to claim 2, further comprising: determining a candidate fingerprint image for registration as a fingerprint template based on the frame of fingerprint data; wherein the comparing differences between two subdata of different phases collected based on the same configuration to obtain a movement blur of the frame of fingerprint data further comprises:
determining an image quality score of the candidate fingerprint image; and
adjusting the movement blur based on the image quality score, wherein the movement blur is negatively correlated with the image quality score.

5. The method according to claim 4, wherein the adjusting the movement blur based on the image quality score comprises:
comparing the image quality score with at least one quality score threshold to obtain an image quality score interval corresponding to the image quality score; and
adjusting the movement blur by a proportion corresponding to the image quality score interval.

6. The method according to claim 5, wherein
if the image quality score is greater than or equal to a first score threshold, the movement blur is decreased by a first proportion;
if the image quality score is less than the first score threshold and greater than or equal to a second score threshold, the movement blur is decreased by a second proportion, wherein the first proportion is greater than the second proportion; and
if the image quality score is less than the second score threshold, the movement blur is kept unchanged.

7. The method according to claim 1, wherein the performing fingerprint template registration based on the movement blur of the frame of fingerprint data comprises:
classifying the frame of fingerprint data based on at least one movement blur threshold to obtain a movement blur type of the frame of fingerprint data, wherein the movement blur type comprises a non-blur type and a full blur type; and
performing fingerprint template registration based on the movement blur type of the frame of fingerprint data.

8. The method according to claim 7, wherein the classifying the frame of fingerprint data based on at least one movement blur threshold to obtain a movement blur type of the frame of fingerprint data comprises:
if the movement blur is less than or equal to a first movement blur threshold, determining the movement blur type of the frame of fingerprint data to be a non-blur type;
if the movement blur is greater than the first movement blur threshold and less than or equal to a second movement blur threshold, determining the movement blur type of the frame of fingerprint data to be a semi-blur type; and
if the movement blur is greater than the second movement blur threshold, determining the movement blur type of the frame of fingerprint data to be a full blur type.

9. The method according to claim 8, further comprising: determining a candidate fingerprint image for registration as a fingerprint template based on the frame of fingerprint data; wherein the performing fingerprint template registration based on the movement blur type of the frame of fingerprint data comprises:
if the type of the fingerprint image is the semi-blur type or non-blur type, determining, based on the image quality score and/or effective area of the candidate fingerprint image, whether to register the candidate fingerprint image as a fingerprint template.

10. The method according to claim 9, wherein the determining, based on the image quality score and/or effective area of the candidate fingerprint image, whether to register the candidate fingerprint image as a fingerprint template comprises:
detecting whether the effective area of the candidate fingerprint image is greater than an area threshold;
if the effective area of the candidate fingerprint image is greater than the area threshold, detecting whether the image quality score of the candidate fingerprint image is greater than a third score threshold; and
if the image quality score of the candidate fingerprint image is greater than the third score threshold, registering the candidate fingerprint image as a fingerprint template.

11. The method according to any one of claims 7 to 10, wherein the performing fingerprint template registration based on the movement blur type of the frame of fingerprint data comprises:
if the movement blur type of the frame of fingerprint data is the non-blur type, performing registration of a first type of fingerprint template based on the frame of fingerprint data; and
if the movement blur type of the frame of fingerprint data is the semi-blur type, performing registration of a second type of fingerprint template based on the frame of fingerprint data.

12. The method according to claim 11, wherein the second type of fingerprint template is used to assist the first type of fingerprint template in fingerprint matching.

13. The method according to claim 11, further comprising:
determining whether the first type of registered fingerprint templates reaches a quantity threshold;
if the first type of registered fingerprint templates reaches the quantity threshold, ending the fingerprint template registration; and
if the first type of registered fingerprint templates does not reach the quantity threshold, continuing the step of collecting fingerprint data through a fingerprint sensor at a first frame rate.

14. The method according to claim 1, further comprising:
during a fingerprint recognition process, collecting fingerprint data through the fingerprint sensor at a second frame rate, wherein the first frame rate is greater than the second frame rate.

15. The method according to claim 1, wherein the fingerprint template registration process comprises a process of continuous contact between a finger and a fingerprint collection area and movement, wherein the movement is used to change the fingerprint position where the finger is in contact with the fingerprint collection area.

16. The method according to claim 1, wherein the fingerprint sensor comprises an ultrasonic fingerprint sensor.

17. An apparatus for processing fingerprints, comprising:
a collection module, configured to, during a fingerprint template registration process, collect fingerprint data through a fingerprint sensor at a first frame rate, wherein each frame of fingerprint data comprises a plurality of subdata of different phases, and at least two of the plurality of subdata of different phases are collected based on same configuration; and
a registration module, configured to compare differences between two subdata of different phases collected based on the same configuration to obtain a movement blur of the frame of fingerprint data, and perform fingerprint template registration based on the movement blur of the frame of fingerprint data.

18. The apparatus according to claim 17, wherein the registration module is configured to determine a difference map between the two subdata of different phases collected based on the same configuration, determine a dispersion of the difference map in a space domain, and determine the movement blur of the frame of fingerprint data based on the dispersion.

19. The apparatus according to claim 18, wherein the registration module is further configured to determine a candidate fingerprint image for registration as a fingerprint template based on the frame of fingerprint data; and the registration module is configured to determine a quantity of signals of the candidate fingerprint image, and normalize the dispersion based on the quantity of signals to obtain the movement blur of the frame of fingerprint data.

20. The apparatus according to claim 18, wherein the registration module is further configured to determine a candidate fingerprint image for registration as a fingerprint template based on the frame of fingerprint data; and the registration module is configured to determine an image quality score of the candidate fingerprint image, and adjust the movement blur based on the image quality score, wherein the movement blur is negatively correlated with the image quality score.

21. The apparatus according to claim 20, wherein the registration module is configured to compare the image quality score with at least one quality score threshold to obtain an image quality score interval corresponding to the image quality score; and adjust the movement blur by a proportion corresponding to the image quality score interval.

22. The apparatus according to claim 17, wherein the registration module is configured to classify the frame of fingerprint data based on at least one movement blur threshold to obtain a movement blur type of the frame of fingerprint data, wherein the movement blur type comprises a non-blur type and a full blur type; and perform fingerprint template registration based on the movement blur type of the frame of fingerprint data.

23. The apparatus according to claim 21, wherein the registration module is configured to: if the movement blur is less than or equal to a first movement blur threshold, determine the movement blur type of the frame of fingerprint data to be a non-blur type; if the movement blur is greater than the first movement blur threshold and less than or equal to a second movement blur threshold, determine the movement blur type of the frame of fingerprint data to be a semi-blur type; and if the movement blur is greater than the second movement blur threshold, determine the movement blur type of the frame of fingerprint data to be a full blur type.

24. The apparatus according to claim 22, wherein the registration module is further configured to determine a candidate fingerprint image for registration as a fingerprint template based on the frame of fingerprint data; and the registration module is configured to, if the type of the fingerprint image is the semi-blur type or non-blur type, determine, based on the image quality score and/or effective area of the candidate fingerprint image, whether to register the candidate fingerprint image as a fingerprint template.

25. The apparatus according to claim 22, wherein the registration module is configured to: if the movement blur type of the frame of fingerprint data is the non-blur type, perform registration of a first type of fingerprint template based on the frame of fingerprint data; and if the movement blur type of the fingerprint data is the semi-blur type, perform registration of a second type of fingerprint template based on the frame of fingerprint data.

26. An electronic device, comprising:
a fingerprint sensor; and
the apparatus for processing fingerprints according to any one of claims 17 to 25.

27. The electronic device according to claim 26, wherein the fingerprint sensor comprises an ultrasonic fingerprint sensor.

28. An electronic device, comprising:
a processor; and
a memory storing a program, wherein the program comprises instructions that, when executed by the processor, enable the processor to perform the method according to any one of claims 1 to 16.

29. A non-transitory computer-readable storage medium storing computer instructions, wherein the computer instructions are used to enable a computer to perform the method according to any one of claims 1 to 16.
